# EUROPÄISCHE PATENTSCHRIFT

(11) **EP 3 248 196 B1**
(45) Veröffentlichungstag und Bekanntmachung des Hinweises auf die Patenterteilung: **24.10.2018**
(21) Anmeldenummer: 16701437.2
(22) Anmeldetag: 19.01.2016
(51) Int. Cl.: G21F 9/00, G21F 9/30, G21D 1/00

(54) **VERFAHREN ZUR DEKONTAMINATION VON RADIOAKTIV KONTAMINIERTEN WERKSTÜCKEN**
METHOD FOR DECONTAMINATING RADIOACTIVELY CONTAMINATED WORKPIECES
PROCÉDÉ DE DÉCONTAMINATION DE PIÈCES PRÉSENTANT UNE CONTAMINATION RADIOACTIVE

(30) Priorität: 21.01.2015 DE 102015000500
(43) Veröffentlichungstag der Anmeldung: 29.11.2017
(73) Patentinhaber: RST GmbH, 46499 Hamminkeln (DE)
(72) Erfinder: FINKENBERG, Hans, 46397 Bocholt (DE); BORRMANN, Franz, 63734 Aschaffenburg (DE)
(74) Vertreter: Gottschald Patentanwälte Partnerschaft mbB
(86) Internationale Anmeldenummer: PCT/EP2016/051019
(87) Internationale Veröffentlichungsnummer: WO 2016/116447

(56) Entgegenhaltungen:
- WO-A1-95/26558
- DE-A1- 3 603 708
- JP-A- 2002 311 191

## Beschreibung

Die Erfindung betrifft ein Verfahren zur Dekontamination von radioaktiv kontaminierten Werkstücken mit den Merkmalen des Oberbegriffs von Anspruch 1.

Insbesondere beim Rückbau von kerntechnischen Anlagen fällt eine große Menge an Material an, welches einer Dekontamination unterzogen werden muss, bevor es für eine neuerliche Verwendung oder Verwertung außerhalb des kerntechnischen Bereichs zur Verfügung steht. Dies betrifft insbesondere Material, welches radioaktiv kontaminiert ist, nicht aber selbst radioaktiv aktiviert wurde. Die Dekontamination erfolgt prinzipiell durch eine umfassende Reinigung von den Kontaminanten, welche mechanisch und/oder chemisch erfolgen kann sowie durch eine Freigabemessung, welche dann den Erfolg der Reinigung gemäß der gesetzlichen Normen und Grenzwerte bestätigen und dokumentieren soll.

Die Einhaltung dieser Normen gewährleistet das Vermeiden einer unzulässigen Strahlenbelastung außerhalb des Bereichs der Nuklearanlage bzw. der Anlage zur Dekontamination. Allerdings fällt auch bei der Dekontamination selbst eine Strahlenbelastung speziell der die Dekontamination durchführenden Mitarbeiter an. Wesentliche Schritte bei der Dekontamination werden von Mitarbeitern manuell oder jedenfalls in der unmittelbaren Umgebung der zu dekontaminierenden Werkstücke durchgeführt, weswegen die Mitarbeiter während der Arbeiten Strahlung ausgesetzt sind. Zwar sind für diese Arbeit auch wirksame Strahlenschutzbekleidungen und strenge Arbeitszeitregelungen vorgeschrieben, doch bringt es der langwierige Dekontaminationsvorgang und das regelmäßig in sehr großer Menge anfallende zu dekontaminierende Material mit sich, dass insgesamt über einen langen Zeitraum Mitarbeiter bei der Dekontamination radioaktiver Strahlung ausgesetzt sind. Zusätzlich verlängert sich der Dekontaminationsprozess, wenn sich bei der Freigabemessung herausstellt, dass die erfolgte Reinigung nicht ausreichend war und deshalb der Schritt der Reinigung sowie anschließend auch die Freigabemessung wiederholt werden müssen.

Daneben macht dieser lange Zeitraum der überwiegend manuellen Mitarbeitertätigkeit den Dekontaminationsprozess auch wirtschaftlich kostspielig.

Dekontaminationsverfahren sind z.B. aus den Patentschriften JP 2002-311191 und DE 3603708 A1 bekannt.

Vor diesem Hintergrund besteht die Aufgabe der Erfindung darin, das aus dem Stand der Technik bekannte Verfahren zur Dekontamination von radioaktiv kontaminierten Werkstücken so weiterzuentwickeln und zu verbessern, dass die unmittelbar am Werkstück erforderliche Arbeitszeit eines Mitarbeiters verringert wird.

Diese Aufgabe wird bei dem Verfahren zur Dekontamination von radioaktiv kontaminierten Werkstücken mit den Merkmalen des Oberbegriffs von Anspruch 1 durch die Merkmale des kennzeichnenden Teils von Anspruch 1 gelöst.

Wesentlich für die Erfindung ist die Erkenntnis, dass der Dekontaminationsprozess dadurch rationalisiert werden kann, dass Messergebnisse an einem zu dekontaminierenden Werkstück datentechnisch so verarbeitet werden können, dass sie bei der Verarbeitung nachfolgender Werkstücke berücksichtigt werden und somit eine schnellere, weil stärker zielgerichtete, Reinigung dieser nachfolgenden Werkstücke erlauben. Weil die zu dekontaminierenden Werkstücke erstens regelmäßig bei einer Abtrennung und deshalb bei einer Zerkleinerung von größeren Strukturen anfallen und zweitens bei Werkstücken aus benachbarten Bereichen häufig auch ähnliche oder identische Anteile an Kontaminanten vorhanden sind, sind bei einem Werkstück gewonnene Erkenntnisse bei der Reinigung vorteilhaft bei nachfolgenden Werkstücken anwendbar.

Diese Erkenntnisse können etwa, z. B. aus geometrischen Gründen, besonders schwierig zu reinigende oder besonders stark kontaminierte Abschnitte des Werkstücks betreffen. Sie können auch besonders geeignete Reinigungsmittel für bestimmte Kontaminanten betreffen. Im Ergebnis kann damit die von dem Mitarbeiter aufgebrachte Reinigungsarbeit zielgenauer ausgerichtet werden, sodass sie insgesamt ohne Einschränkung der Gründlichkeit rascher ausgeführt werden kann und somit zu einer Verringerung der Arbeitszeit mit Strahlenaussetzung sowie der Kosten führt.

Die datentechnische Unterstützung eines Prozessschritts kann nun sowohl darin bestehen, einen aus den Messergebnissen ermittelten Steuerparameter dem Mitarbeiter elektronisch anzuzeigen (Unteranspruch 3) oder einen automatisierten Arbeitsschritt gemäß diesem Steuerparameter ausführen zu lassen (Unteranspruch 4).

Besonders vorteilhaft ist das Vorsehen eines Schrittes zur Messung einer Geometrie des Werkstücks, wie er durch den Unteranspruch 5 beschrieben wird. Eine somit ermittelte geometrische Information ist nicht nur an sich für die Reinigung interessant, sondern sie kann auch zu ggf. inhomogenen Kontaminationskonzentrationen - die in einem entsprechenden Messschritt gemäß Unteranspruch 6 gemessen werden können-, in Bezug gesetzt werden, um etwa die Reinigung noch zielgenauer auszurichten.

Die bevorzugte Ausgestaltung des Unteranspruchs 9 sieht einen Schnell-Messschritt vor, welcher der Freigabemessung vorgelagert sein kann. In so einem Schnell-Messschritt kann eine Vorab-Prüfung stattfinden, ob die Erfordernisse einer erfolgreichen Freigabemessung vorliegen. Der Vorteil ist einerseits, dass ein solcher Schnell-Messschritt nicht den den strengen Anforderungen der Freigabemessung genügen muss und insbesondere abgebrochen werden kann, sobald Anzeichen vorliegen, dass die Freigabemessung nicht erfolgreich sein wird. Der entsprechende Iterationszyklus zwischen Messung und Reinigung ist entsprechend kürzer.

Die bevorzugten Ausgestaltungen der Unteransprüche 10 und 11 beschreiben spezielle Möglichkeiten zur Einstellung des Reinigungsschritts basierend auf den Messungen.

Auf der Grundlage des vorschlagsgemäßen Verfahrens lässt sich ein umfassendes und lernendes Expertensystem verwirklichen. Dies ist Gegenstand der bevorzugten Ausführung des Unteranspruchs 13.

In Kombination mit einer Modularität der einzelnen Prozessschritte erlaubt es das vorschlagsgemäße Verfahren gemäß der vorteilhaften Ausbildung gemäß Unteranspruch 15, für einzelne Prozessschritte eine parallele Mehrfachbearbeitung vorzusehen. Das ist insbesondere dann vorteilhaft, wenn die Bearbeitungsdauer der Prozessschritte sehr unterschiedlich ist. Durch eine solche Mehrfachbearbeitung der langwierigen Prozessschritte kann eine Durchsatzerhöhung mittels einer begrenzten Aufwandserhöhung erreicht werden.

Weitere vorteilhafte und bevorzugte Ausgestaltungen ergeben sich aus der nachfolgenden Beschreibung mit Bezug auf die Figuren. In der lediglich ein Ausführungsbeispiel wiedergebenden Zeichnung zeigt
- Fig. 1: eine schematische Darstellung einer Prozessschrittkette für eine Dekontaminationsanlage zur Durchführung des vorschlagsgemäßen Verfahrens und
- Fig. 2a, b): eine jeweilige Darstellung a) einer Geometriemessung an einem zu dekontaminierenden Werkstück bei einer Ausführung des vorschlagsgemäßen Verfahrens gemäß der Prozessschrittkette der Fig. 1 sowie b) einer automatischen Einstellung einer Reinigungsvorrichtung basierend auf dieser Geometriemessung.

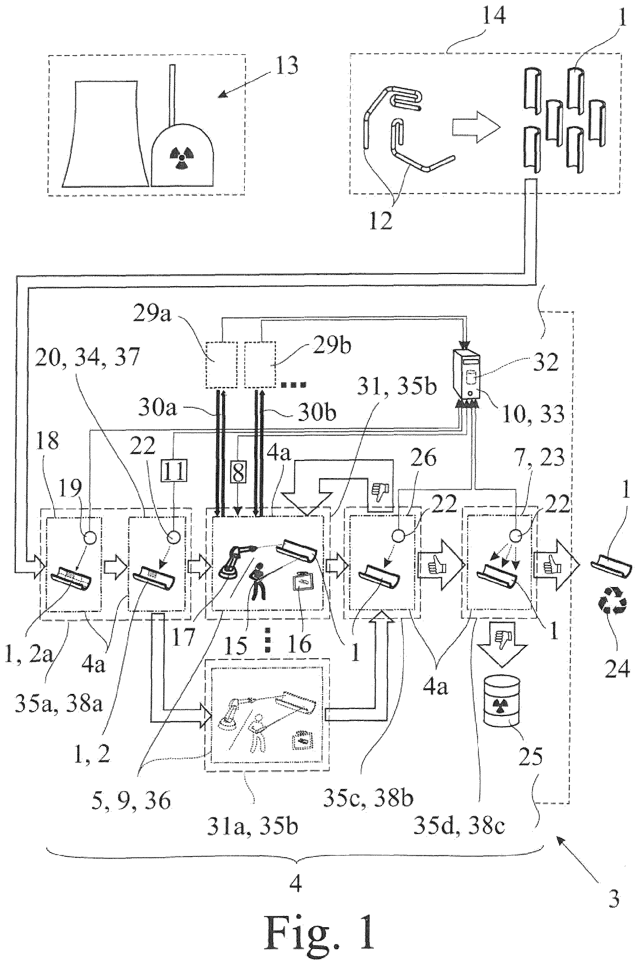

Das vorschlagsgemäße Verfahren dient zur Dekontamination von radioaktiv kontaminierten Werkstücken 1. Dabei durchläuft ein aktuelles Werkstück 2 einer zu dekontaminierenden Werkstückfolge in einer Dekontaminationsanlage 3 eine Prozessschrittkette 4 mit sequenziellen Prozessschritten 4a. Die prinzipiellen Zusammenhänge sind dabei in der Fig. 1 wiedergegeben. Neben ggf. weiteren Prozessschritten 4a, auf die untenstehend noch genauer eingegangen wird, umfassen die Prozessschritte 4a einen Reinigungsschritt 5 zur Reinigung des aktuellen Werkstücks von Kontaminanten 6 - unter denen insbesondere radioaktive Nuklide zu verstehen sind - und einen nachfolgenden Kontaminations-Messschritt 7 zum Messen einer Kontamination des aktuellen Werkstücks 2. Zwei Prozessschritte 4a sind als "nachfolgend" zu verstehen, wenn der eine nach dem anderen in der Prozessschrittkette 4 durchlaufen wird. Nicht erforderlich ist es, dass die beiden fraglichen Prozessschritte 4a unmittelbar hintereinander folgen. Mit anderen Worten kann ein Prozessschritt 4a oder auch mehrere zwischen den beiden Prozessschritten 4a vorgesehen sein. Die Messung der Kontamination kann eine insbesondere beliebige solche Messung radioaktiver Kontaminanten umfassen, insbesondere aber eine Messung gemäß § 29 StrlSchV sowie gemäß den entsprechenden Anlagen zu der Norm.

Vorschlagsgemäß wird bei dem Verfahren mindestens ein Prozessschritt 4a zumindest teilweise datenverarbeitungstechnisch unterstützt und basierend auf einem Steuerparameter 8 durchgeführt. Dieser Prozessschritt 4a wird hier und nachfolgend als Steuerparameterschritt 9 bezeichnet. Vorzugsweise umfasst diese datenverarbeitungstechnische Unterstützung eine Verarbeitung durch eine Rechenanordnung 10, bei der es sich insbesondere um ein Computersystem handeln kann. Ebenso ist vorschlagsgemäß vorgesehen, dass in der Prozessschrittkette 4 ein Messwert 11 sensorisch an dem aktuellen Werkstück 2 ermittelt wird. In dem in der Fig. 1 dargestellten Beispiel und wie bevorzugt handelt es sich bei dem Steuerparameterschritt 9 um den Reinigungsschritt 5.

Das vorschlagsgemäße Verfahren ist nun dadurch gekennzeichnet, dass basierend auf dem an dem aktuellen Werkstück 2 ermittelten Messwert 11 der Steuerparameter 8 für ein dem aktuellen Werkstück 2 nachfolgendes Werkstück 2a der Werkstückfolge bestimmt wird. Bevorzugt erfolgt diese Bestimmung durch die obige Rechenanordnung 10.

Gemäß einer bevorzugten und im Ausführungsbeispiel der Fig. 1 dargestellten Variante sind die Werkstücke 1 Teile von Einbauten 12 einer Nuklearanlage 13, wie z. B. einem Kernkraftwerk. Es kann auch vorgesehen sein, dass vor dem Durchlaufen der Prozessschrittkette 4 die Werkstücke 1 in einem Vorverarbeitungsschritt 14 durch eine Zertrennung der Einbauten 12 gewonnen werden. Ganz regelmäßig sind solche Einbauten 12, zu denen insbesondere Kessel- oder Tankteile sowie Rohre zählen, einer Nuklearanlage 13 so groß, dass sie ohne eine solche Zertrennung nicht in der Dekontamination handhabbar sind. Insofern stellt der Vorverarbeitungsschritt 14 diese Handhabbarkeit her. Durch den Ursprung aus z. B. einem einzelnen Einzelstück der Einbauten 12 ergibt sich aber auch eine Korrelation aufeinanderfolgender Werkstücke 1 der Werkstückfolge hinsichtlich ihrer Kontaminationseigenschaften, welche vorschlagsgemäß vorteilhaft ausgenutzt werden können.

Eine erste Variante der datenverarbeitungstechnischen Unterstützung sieht vor, dass in dem Steuerparameterschritt 9 einem Bediener 15 zur Ausführung des Steuerparameterschrittes 9 der Steuerparameter 8 übermittelt wird. Der Steuerparameter wird also von dem Bediener 15 empfangen und von ihm umgesetzt. Hier kann der Steuerparameter 8 eine Auswahlinformation, etwa zur Auswahl eines Werkzeugs oder Aufsatzes zur Ausführung des Steuerparameterschrittes 9 umfassen. Eine Möglichkeit ist dann, diesen Steuerparameter 8 auf einer Anzeigevorrichtung 16 visuell darzustellen.

Alternativ oder zusätzlich kann vorgesehen sein, dass der Steuerparameterschritt 9 zumindest teilweise und vorzugsweise vollständig automatisiert basierend auf dem Steuerparameter 8 durchgeführt wird. Wie in der Fig. 1 dargestellt kann hierzu beispielsweise ein Reinigungsroboter 17 vorgesehen sein, welcher gemäß dem Steuerparameter 8 automatisch die Reinigung des Reinigungsschritts 5 durchführt.

Eine bevorzugte Variante zur Ermittlung des Steuerparameters 8 sieht vor, dass die Prozessschrittkette 4 - wie in der Fig. 1 gezeigt - einen dem Reinigungsschritt 5 vorangehenden Geometrie-Messschritt 18 zum Messen einer Geometrieinformation des aktuellen Werkstücks 2 umfasst. Analog zu dem Begriff "nachfolgend" ist auch der Begriff "vorangehend" hier so zu verstehen, dass kein unmittelbares Vorangehen erforderlich ist, also auch Zwischenschritte vorgesehen sein können, was auch der Darstellung der Fig. 1 entspricht. Der Begriff "Geometrieinformation" ist hier weit zu verstehen und kann eine prinzipiell beliebige Information zu der Geometrie des aktuellen Werkstücks 2 bedeuten. Die Geometrieinformation kann auch eine Komplettvermessung des aktuellen Werkstücks 2 umfassen. Es kann dann weiter vorgesehen sein, dass der Steuerparameter 8 basierend auf der an dem aktuellen Werkstück 2 gemessenen Geometrieinformation bestimmt wird. Für das Messen der Geometrieinformation kann eine z. B. laserbasierte Geometrie-Messanordnung 19 vorgesehen sein.

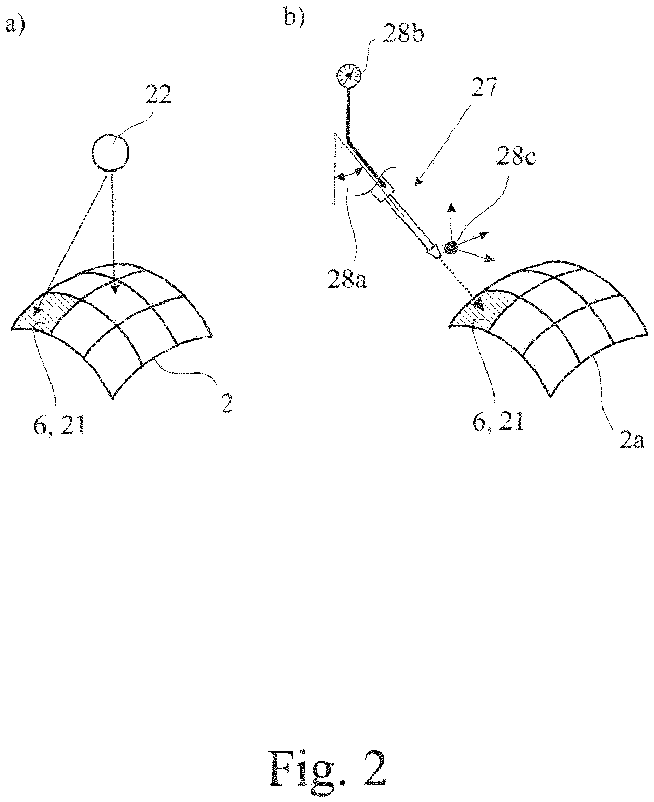

Eine bevorzugte Ausführungsform des vorschlagsgemäßen Verfahrens sieht vor, dass - wie ebenfalls in der Fig. 1 dargestellt - die Prozessschrittkette 4 einen dem Reinigungsschritt 5 vorangehenden Vorkontaminations-Messschritt 20 zum Messen einer Kontamination des aktuellen Werkstücks 2 umfasst. Bei diesem Vorkontaminations-Messschritt 20 kann es sein, dass eine insbesondere auf die obige Geometrieinformation bezogene Kontaminationsverteilung 21 und/oder eine Kontaminationszusammensetzung - worunter vor allem eine Nuklidzusammensetzung verstanden werden kann - an dem aktuellen Werkstück 2 gemessen wird. Die Fig. 2a zeigt beispielhaft einen solchen Vorgang. Auch diese Kontaminationsverteilung ist eine z. B. für den Reinigungsschritt 5 relevante Größe, sodass gemäß einer bevorzugten Variante der Steuerparameter 8 basierend auf der an dem aktuellen Werkstück 2 gemessenen Kontaminationsverteilung 21 und/oder der Kontaminationszusammensetzung bestimmt wird. Dies wird untenstehend noch näher erläutert.

Als besonders geeignet für die Messung einer Kontamination hat sich die Gammaspektroskopie erwiesen, weswegen bevorzugt in dem Kontaminations-Messschritt 7 und/oder in dem Vorkontaminations-Messschritt 20 die Kontamination durch eine Gammaspektroskopievorrichtung 22 gemessen wird.

Bei dem obigen Kontaminations-Messschritt 7 kann es sich um einen Freigabe-Messschritt 23 zur Bestimmung einer Werkstückfreigabe handeln. Dabei erfolgt die Werkstückfreigabe des aktuellen Werkstücks 2 zur Abgabe in den normalen Wertstoffkreislauf 24 - also dem nichtnuklearen Wert- bzw. Rohstoffkreislauf - wenn in diesem Freigabe-Messschritt 23 bestimmt wird, dass das aktuelle Werkstück 2 die Freigabebedingungen erfüllt, welche vor allem gesetzlich vorgegeben sein können. Eine relevante Norm ist dabei der oben genannte § 29 StrlSchV sowie die in der Norm genannten Anlagen. Wenn das aktuelle Werkstück 2 die Freigabebedingungen nicht erfüllt, ist vorzugsweise eine Rückführung des aktuellen Werkstücks 2 ggf. unmittelbar vor den Reinigungsschritt 5 vorgesehen, sodass ein erneuter Reinigungsvorgang erfolgt. Es kann sein, dass ein aktuelles Werkstück 2, welches wiederholt in dem Freigabe-Messschritt 23 die Freigabebedingungen nicht erfüllt, einer Behandlung für radioaktiven Abfall 25 wie etwa einer Sonderlagerung zugeführt wird.

Eine weitere bevorzugte Variante des vorschlagsgemäßen Verfahrens sieht dabei vor, dass - wie auch in der Fig. 1 dargestellt - die Prozessschrittkette 4 einen dem Reinigungsschritt 5 nachgelagerten Schnell-Messschritt 26 zur Schnell-Bestimmung der Werkstückfreigabe umfasst und dass das aktuelle Werkstück 2 in der Prozessschrittkette 4 weitergeführt wird, wenn die Schnell-Bestimmung eine Erfüllung der Freigabebedingungen ergibt. Dieses Weiterführen in der Prozessschrittkette 4 kann insbesondere ein Weiterführen des aktuellen Werkstücks 2 zu dem obigen Freigabe-Messschritt 23 umfassen. Ebenso kann es sein, dass das aktuelle Werkstück 2 ggf. unmittelbar vor den Reinigungsschritt 5 zurückgeführt wird, wenn und insbesondere sobald die Schnell-Bestimmung ein Verletzen der Freigabebedingungen ergibt. Wie bereits oben für den Kontaminations-Messschritt 7 und den Vorkontaminations-Messschritt beschrieben, kann in dem Schnell-Messschritt 26 die Kontamination durch eine Gammaspektroskopievorrichtung 22 gemessen werden.

Bezüglich der Umsetzung des Reinigungsschrittes 5 ist bevorzugt vorgesehen, dass der Reinigungsschritt 5 durch eine Reinigungsvorrichtung 27, insbesondere eine Strahlvorrichtung, basierend auf dem Steuerparameter 8 durchgeführt wird. Eine solche Strahlvorrichtung kann eine Nassstrahlvorrichtung oder eine Trockenstrahlvorrichtung sein. Andere mögliche Arten von Reinigungsvorrichtungen 27 sind für eine elektrolytische oder eine nasschemische Reinigung eingerichtet oder basieren auf dem Einsatz von Ultraschall, Trockeneis oder von Laserstrahlen. Eine bevorzugte diesbezügliche Weiterentwicklung sieht vor, dass der Steuerparameter 8 einen Stellwinkel 28a der Reinigungsvorrichtung 27 zu dem nachfolgenden Werkstück 2a und/oder einen Leistungswert 28b der Reinigungsvorrichtung 27 bei der Reinigung und/oder eine Positionsangabe 28c in Bezug auf das nachfolgende Werkstück 2a für die Reinigungsvorrichtung 27 vorgibt. Die Fig. 2b zeigt die diesbezüglichen prinzipiellen Zusammenhänge. Es ist zu beachten, dass die Fig. 2b das nachfolgende Werkstück 2a, welches in der Darstellung der Fig. 1 noch bei dem Geometrie-Messschritt 18 ist, zu einem dann späteren Zeitpunkt zeigt, zu dem es den Reinigungsschritt 5 erreicht hat. Die gezeigte Reinigungsvorrichtung 27 kann auch an dem obigen Reinigungsroboter 17 angeordnet sein, sodass sie durch den Reinigungsroboter 17 positioniert und ausgerichtet werden kann.

Eine weitere Variante sieht vor, dass basierend auf dem Steuerparameter 8 eine Reinigungsart und/oder eine zu verwendende Reinigungsbestückung für die Reinigungsvorrichtung 27 und/oder ein zur Reinigung zu verwendendes Reinigungsmittel, insbesondere eine Reinigungsflüssigkeit, bestimmt wird. Unter einer Reinigungsart sind insbesondere die oben genannten Möglichkeiten des Reinigens durch einen Nassstrahl, einen Trockenstrahl, Ultraschall, Trockeneis, durch Laserstrahlen oder durch eine elektrolytische oder nasschemische Reinigung zu verstehen. Eine Reinigungsbestückung kann z. B. ein Aufsatz in der Art einer Düse für die Reinigungsvorrichtung 27 sein. Bei dem Reinigungsmittel kann es sich einerseits um Sand oder um eine Reinigungsflüssigkeit handeln, welche wiederum Wasser sowie eine verschiedene Kombination von Detergentien umfassen kann.

Ebenso kann es sein, dass der Steuerparameter 8 eine Zufuhrcharakteristik, insbesondere eine Zufuhrmenge und/oder eine Zufuhrleistung, eines Prozessmittels 29a, b für die Durchführung des Steuerparameterschrittes 9 vorgibt. So kann ein Luftkreislauf 30a und ein Wasserkreislauf 30b vorgesehen sein, der für einen oder mehrere der Prozessschritte 4a das entsprechende Prozessmittel 29a, b - also jeweils Luft oder Wasser - bevorzugt druckbeaufschlagt bereitstellt. Das Prozessmittel 29a, b kann auch für eine andere Vorrichtung als die obige Reinigungsvorrichtung 27 vorgesehen sein, so etwa für eine Lüftung einer Dekontaminationszelle 31, in der etwa der Reinigungsschritt 5 durchgeführt wird. Der Steuerparameter 8 kann dann die Zufuhr des jeweiligen Prozessmittels 29a, b vorgeben.

Die durch das vorschlagsgemäße Verfahren prinzipiell gegebene Lernfähigkeit kann vorteilhaft für das Bereitstellen eines Expertensystems zur Dekontamination eingesetzt werden. So ist bevorzugt vorgesehen, dass basierend auf dem an dem aktuellen Werkstück 2 ermittelten Messwert 10 eine Datenbank 32, in welcher ermittelte Messwerte für eine Vielzahl an Werkstücken hinterlegt sind, eines Steuerrechners 33 aktualisiert wird und dass basierend auf der Datenbank 32 der Steuerparameter 8 bestimmt wird. Dieser Steuerrechner 33 kann - gemäß der Darstellung der Fig. 1 - auch identisch zu der obigen Rechenanordnung 10 sein. Die Bestimmung des Steuerparameters erfolgt bevorzugt durch ein auf dem Steuerrechner 33 ablaufendes Expertensystem, welches also ermittelte Messwerte 10 speichert, analysiert und basierend auf dieser Analyse den Steuerparameter 8 sowie ggf. weitere Informationen für die Dekontamination bereitstellt. Eine bevorzugte Ausführungsform sieht dabei vor, dass eine Vielzahl an Prozessschritten 4a datenverarbeitungstechnisch unterstützt durchgeführt wird und ein Steuerparametersatz für diese Vielzahl an Prozessschritten 4a basierend auf der Datenbank 32 bestimmt wird. Auf diese Weise können eine Vielzahl oder sogar alle Prozessschritte 4a der Prozessschrittkette 4 von dem Expertensystem unterstützt und damit effizienter durchgeführt werden.

Bevorzugt ist es ebenso, dass die sensorische Ermittlung des Messwertes 11 in einem Prozessschritt 4a der Prozessschrittkette 4, welcher hier und nachfolgend als Sensorschritt 34 bezeichnet wird, erfolgt, wobei der Sensorschritt 34 dem Steuerparameterschritt 9 nachfolgt. Im Ausführungsbeispiel der Fig. 1 entspricht der Sensorschritt 34 dem Vorkontaminations-Messschritt 20 und der Steuerparameterschritt 9 dem Reinigungsschritt 5. Es könnte aber auch der Sensorschritt 34 dem Schnell-Messschritt 26 entsprechen, welcher dann dem Steuerparameterschritt 9 nachfolgen würde. Es kann auch mehrere Prozessschritte 4a geben, bei denen jeweils an dem aktuellen Werkstück 2 ein Messwert 11 ermittelt wird. Dann kann der Steuerparameter 8 insbesondere basierend auf einer Vielzahl oder gar basierend auf alle diese Messwerte 11 bestimmt werden.

Eine zumindest teilweise Parallelisierung zur Erhöhung der Taktung des vorschlagsgemäßen Verfahrens kann durch eine bevorzugte Ausführungsform erreicht werden, bei der jedem Prozessschritt 4a der Prozessschrittkette 4 mindestens eine Bearbeitungsstation 35a-d zur Durchführung des jeweiligen Prozessschritts 4a zugeordnet ist. Dann können für einen der Prozessschritte 4a, welcher hier und nachfolgend als Parallelschritt 36 bezeichnet wird, mehr Bearbeitungsstationen 35b vorgesehen sein als für den ihm unmittelbar vorhergehenden Vor-Prozessschritt 37, sodass der Parallelschritt 36 gleichzeitig an mehr Werkstücken 1 durchgeführt werden kann als der Vor-Prozessschritt 37. Wie bereits oben beschrieben wird der Reinigungsschritt 5 in einer Dekontaminationszelle 31 ausgeführt. Für die anderen Prozessschritte 4a sind hier beispielhaft Messzellen 38a-c vorgesehen, wobei der Geometrie-Messschritt 18 und der Vorkontaminations-Messschritt 20 in derselben Messzelle 3a durchgeführt werden. Da der Reinigungsschritt 5 in diesem Ausführungsbeispiel den zeitaufwendigsten Prozessschritt 4a darstellt, bildet dieser vorliegend den Parallelschritt 36, wobei dann entsprechend der Vorkontaminations-Messschritt 20 der Vor-Prozessschritt 37 ist. Daher ist in dem Ausführungsbeispiel auch eine weitere Dekontaminationszelle 31a für den Parallelschritt 36 bzw. den Reinigungsschritt 5 vorgesehen.

## Patentansprüche

1. Verfahren zur Dekontamination von radioaktiv kontaminierten Werkstücken (1), wobei ein aktuelles Werkstück (2) einer zu dekontaminierenden Werkstückfolge in einer Dekontaminationsanlage (3) eine Prozessschrittkette (4) mit sequenziellen Prozessschritten (4a) durchläuft, wobei die Prozessschritte (4a) einen Reinigungsschritt (5) zur Reinigung des aktuellen Werkstücks (2) von Kontaminanten (6) und einen nachfolgenden Kontaminations-Messschritt (7) zum Messen einer Kontamination des aktuellen Werkstücks (2) umfassen, wobei mindestens ein Prozessschritt (4a) zumindest teilweise datenverarbeitungstechnisch unterstützt und basierend auf einem Steuerparameter (8) durchgeführt wird - Steuerparameterschritt (9) - und wobei in der Prozessschrittkette (4) ein Messwert (11) sensorisch an dem aktuellen Werkstück (2) ermittelt wird,
**dadurch gekennzeichnet,**
**dass** basierend auf dem an dem aktuellen Werkstück (2) ermittelten Messwert (11) der Steuerparameter (8) für ein dem aktuellen Werkstück (2) nachfolgendes Werkstück (2a) der Werkstückfolge bestimmt wird.

2. Verfahren nach Anspruch 1, **dadurch gekennzeichnet, dass** die Werkstücke (1) Teile von Einbauten (12) einer Nuklearanlage (13), vorzugsweise eines Kernkraftwerks, sind, insbesondere, dass vor dem Durchlaufen der Prozessschrittkette (4) die Werkstücke (1) in einem Vorverarbeitungsschritt (14) durch eine Zertrennung der Einbauten (12) gewonnen werden.

3. Verfahren nach Anspruch 1 oder 2, **dadurch gekennzeichnet, dass** in dem Steuerparameterschritt (9) einem Bediener (15) zur Ausführung des Steuerparameterschrittes (9) der Steuerparameter (8), vorzugsweise umfassend eine Auswahlinformation, übermittelt wird, insbesondere auf einer Anzeigevorrichtung (16) visuell dargestellt wird.

4. Verfahren nach einem der Ansprüche 1 bis 3, **dadurch gekennzeichnet, dass** der Steuerparameterschritt (9) zumindest teilweise, vorzugsweise vollständig, automatisiert basierend auf dem Steuerparameter (8) durchgeführt wird.

5. Verfahren nach einem der Ansprüche 1 bis 4, **dadurch gekennzeichnet, dass** die Prozessschrittkette (4) einen dem Reinigungsschritt (5) vorangehenden Geometrie-Messschritt (18) zum Messen einer Geometrieinformation des aktuellen Werkstücks (2) umfasst, vorzugsweise, dass der Steuerparameter (8) basierend auf der an dem aktuellen Werkstück (2) gemessenen Geometrieinformation bestimmt wird.

6. Verfahren nach einem der Ansprüche 1 bis 5, **dadurch gekennzeichnet, dass** die Prozessschrittkette (4) einen dem Reinigungsschritt (5) vorangehenden Vorkontaminations-Messschritt (20) zum Messen einer Kontamination des aktuellen Werkstücks (2) umfasst, vorzugsweise, wobei in dem Vorkontaminations-Messschritt (20) eine, insbesondere auf die Geometrieinformation bezogene, Kontaminationsverteilung (21) und/oder Kontaminationszusammensetzung, insbesondere Nuklidzusammensetzung, an dem aktuellen Werkstück (2) gemessen wird, weiter insbesondere, dass der Steuerparameter (8) basierend auf der an dem aktuellen Werkstück (2) gemessenen Kontaminationsverteilung (21) und/oder Kontaminationszusammensetzung bestimmt wird.

7. Verfahren nach einem der Ansprüche 1 bis 6, **dadurch gekennzeichnet, dass** in dem Kontaminations-Messschritt (7), vorzugsweise auch in dem Vorkontaminations-Messschritt (20), die Kontamination durch eine Gammaspektroskopievorrichtung (22) gemessen wird.

8. Verfahren nach einem der Ansprüche 1 bis 7, **dadurch gekennzeichnet, dass** der Kontaminations-Messschritt (7) ein Freigabe-Messschritt (23) zur Bestimmung einer Werkstückfreigabe ist, wobei die Werkstückfreigabe des aktuellen Werkstücks (2) zur Abgabe in den normalen Wertstoffkreislauf (24) erfolgt, wenn in dem Freigabe-Messschritt (23) bestimmt wird, dass das aktuelle Werkstück (2) die insbesondere gesetzlichen Freigabebedingungen erfüllt.

9. Verfahren nach Anspruch 8, **dadurch gekennzeichnet, dass** die Prozessschrittkette (4) einen dem Reinigungsschritt (5) nachgelagerten Schnell-Messschritt (26) zur Schnell-Bestimmung der Werkstückfreigabe umfasst und dass das aktuelle Werkstück (2) in der Prozessschrittkette (4) weitergeführt wird, wenn die Schnell-Bestimmung eine Erfüllung der Freigabebedingungen ergibt, vorzugsweise, dass das aktuelle Werkstück (2) vor den Reinigungsschritt (5) zurückgeführt wird, wenn und insbesondere sobald die Schnell-Bestimmung ein Verletzen der Freigabebedingungen ergibt, weiter insbesondere, dass in dem Schnell-Messschritt (26) die Kontamination durch eine Gammaspektroskopievorrichtung (22) gemessen wird.

10. Verfahren nach einem der Ansprüche 1 bis 9, **dadurch gekennzeichnet, dass** der Reinigungsschritt (5) durch eine Reinigungsvorrichtung (27), insbesondere eine Strahlvorrichtung, basierend auf dem Steuerparameter (8) durchgeführt wird, vorzugsweise, dass der Steuerparameter (8) einen Stellwinkel (28a) der Reinigungsvorrichtung (27) zu dem nachfolgenden Werkstück (2a) und/oder einen Leistungswert (28b) der Reinigungsvorrichtung (27) bei der Reinigung und/oder eine Positionsangabe (28c) in Bezug auf das nachfolgende Werkstück (2a) für die Reinigungsvorrichtung (27) vorgibt.

11. Verfahren nach Anspruch 10, **dadurch gekennzeichnet, dass** basierend auf dem Steuerparameter (8) eine Reinigungsart und/oder eine zu verwendende Reinigungsbestückung für die Reinigungsvorrichtung (27) und/oder ein zur Reinigung zu verwendendes Reinigungsmittel, insbesondere eine Reinigungsflüssigkeit, bestimmt wird.

12. Verfahren nach einem der Ansprüche 1 bis 11, **dadurch gekennzeichnet, dass** der Steuerparameter (8) eine Zufuhrcharakteristik, insbesondere eine Zufuhrmenge und/oder eine Zufuhrleistung, eines Prozessmittels (29a, b) für die Durchführung des Steuerparameterschrittes (9) vorgibt.

13. Verfahren nach einem der Ansprüche 1 bis 12, **dadurch gekennzeichnet, dass** basierend auf dem an dem aktuellen Werkstück (2) ermittelten Messwert (10) eine Datenbank (32), in welcher ermittelte Messwerte für eine Vielzahl an Werkstücken hinterlegt sind, eines Steuerrechners (33) aktualisiert wird und dass basierend auf der Datenbank (32), vorzugsweise durch ein auf dem Steuerrechner (33) ablaufendes Expertensystem, der Steuerparameter (8) bestimmt wird, vorzugsweise, wobei eine Vielzahl an Prozessschritten (4a) datenverarbeitungstechnisch unterstützt durchgeführt wird und ein Steuerparametersatz für diese Vielzahl an Prozessschritten (4a) basierend auf der Datenbank (32) bestimmt wird.

14. Verfahren nach einem der Ansprüche 1 bis 13, **dadurch gekennzeichnet, dass** die sensorische Ermittlung des Messwertes (10) in einem Prozessschritt (4a) der Prozessschrittkette (4) - Sensorschritt (34) - erfolgt, wobei der Sensorschritt (34) dem Steuerparameterschritt (9) nachfolgt.

15. Verfahren nach einem der Ansprüche 1 bis 14, **dadurch gekennzeichnet, dass** jedem Prozessschritt (4a) der Prozessschrittkette (4) mindestens eine Bearbeitungsstation (35a-d) zur Durchführung des jeweiligen Prozessschritts (4a) zugeordnet ist und dass für einen der Prozessschritte (4a) - Parallelschritt (36) - mehr Bearbeitungsstationen (35b) vorgesehen sind als für den ihm unmittelbar vorhergehenden Vor-Prozessschritt (37), sodass der Parallelschritt (36) gleichzeitig an mehr Werkstücken (1) durchgeführt werden kann als der Vor-Prozessschritt (37).

## Claims

1. Method for decontaminating radioactively contaminated workpieces (1), wherein a current workpiece (2) of a workpiece sequence that is to be decontaminated passes through a process step chain (4) having sequential process steps (4a) in a decontamination system (3), wherein the process steps (4a) comprise a cleaning step (5) for cleaning contaminants (6) off the current workpiece (2) and a subsequent contamination measurement step (7) for measuring a contamination of the current workpiece (2), wherein at least one process step (4a) is performed in a manner supported at least in part by data processing technology and based on a control parameter (8) control parameter step (9) - and wherein a measurement value (11) is ascertained by way of sensor means on the current workpiece (2) in the process step chain (4), **characterized in that** the control parameter (8) for a workpiece (2a) of the workpiece sequence that follows the current workpiece (2) is determined based on the measurement value (11) which has been ascertained on the current workpiece (2).

2. Method according to Claim 1, **characterized in that** the workpieces (1) are parts of fittings (12) of a nuclear facility (13), preferably of a nuclear power plant, in particular **in that**, before the workpieces (1) pass through the process step chain (4), they are obtained in a pre-processing step (14) by disassembly of the fittings (12).

3. Method according to Claim 1 or 2, **characterized in that** the control parameter (8), preferably comprising selection information, is transmitted in the control parameter step (9) to an operator (15) for performing the control parameter step (9), in particular is visually presented on an indicator apparatus (16).

4. Method according to one of Claims 1 to 3, **characterized in that** the control parameter step (9) is performed at least partially, preferably entirely, automatically based on the control parameter (8).

5. Method according to one of Claims 1 to 4, **characterized in that** the process step chain (4) comprises a geometry measurement step (18), which precedes the cleaning step (5), for measuring geometry information of the current workpiece (2), preferably **in that** the control parameter (8) is determined based on the geometry information that is measured on the current workpiece (2).

6. Method according to one of Claims 1 to 5, **characterized in that** the process step chain (4) comprises a pre-contamination measurement step (20), which precedes the cleaning step (5), for measuring a contamination of the current workpiece (2), preferably wherein a contamination distribution (21) and/or contamination composition, in particular nuclide composition, in particular referring to the geometry information, on the current workpiece (2) is measured in the pre-contamination measurement step (20), more particularly **in that** the control parameter (8) is determined based on the contamination distribution (21) and/or contamination composition measured on the current workpiece (2).

7. Method according to one of Claims 1 to 6, **characterized in that** the contamination is measured by a gamma spectroscopy apparatus (22) in the contamination measurement step (7), preferably also in the pre-contamination measurement step (20).

8. Method according to one of Claims 1 to 7, **characterized in that** the contamination measurement step (7) is a release measurement step (23) for determining a workpiece release, wherein the workpiece release of the current workpiece (2) is performed for delivery into the normal material cycle (24) if it is determined in the release measurement step (23) that the current workpiece (2) meets the in particular statutory release conditions.

9. Method according to Claim 8, **characterized in that** the process step chain (4) comprises a fast measurement step (26), arranged after the cleaning step (5), for quickly determining the workpiece release and **in that** the current workpiece (2) is passed on in the process step chain (4) if the fast determination results in the release conditions being met, preferably, **in that** the current workpiece (2) is returned to before the cleaning step (5) if and in particular as soon as the fast determination results in the release conditions being breached, more particularly **in that** the contamination is measured in the fast measurement step (26) by a gamma spectroscopy apparatus (22).

10. Method according to one of Claims 1 to 9, **characterized in that** the cleaning step (5) is performed by a cleaning apparatus (27), in particular an abrasive blasting apparatus, based on the control parameter (8), preferably **in that** the control parameter (8) indicates a positioning angle (28a) of the cleaning apparatus (27) with respect to the following workpiece (2a) and/or a performance value (28b) of the cleaning apparatus (27) during the cleaning and/or a position indication (28c) with respect to the following workpiece (2a) for the cleaning apparatus (27).

11. Method according to Claim 10, **characterized in that** a type of cleaning and/or a cleaning add-on device for the cleaning apparatus (27) to be used and/or a cleaning agent to be used for cleaning, in particular a cleaning liquid, is determined based on the control parameter (8).

12. Method according to one of Claims 1 to 11, **characterized in that** the control parameter (8) specifies a supply characteristic, in particular a feed quantity and/or a feed performance, of a process means (29a, b) for the performance of the control parameter step (9).

13. Method according to one of Claims 1 to 12, **characterized in that** a database (32), in which ascertained measurement values for a multiplicity of workpieces are stored, of a control computer (33) is updated based on the measurement value (10) which has been ascertained on the current workpiece (2) and **in that** the control parameter (8) is determined based on the database (32), preferably by an expert system running on the control computer (33), preferably wherein a multiplicity of process steps (4a) is performed in a manner supported by data processing technology and a control parameter set for said multiplicity of process steps (4a) is determined based on the database (32).

14. Method according to one of Claims 1 to 13, **characterized in that** the ascertainment of the measurement value (10) by way of sensor means is effected in a process step (4a) of the process step chain (4) - sensor step (34), wherein the sensor step (34) follows after the control parameter step (9).

15. Method according to one of Claims 1 to 14, **characterized in that** each process step (4a) of the process step chain (4) is assigned at least one processing station (35a-d) for performing the respective process step (4a) and **in that** more processing stations (35b) are provided for one of the process steps (4a) - parallel step (36) - than for the pre-process step (37) that immediately precedes it, such that the parallel step (36) can be performed on more workpieces (1) at the same time than the pre-process step (37).

## Revendications

1. Procédé de décontamination de pièces contaminées par la radioactivité (1), une pièce actuelle (2) d'une succession de pièces à décontaminer dans une installation de décontamination (3) traversant une chaîne d'étapes de processus (4) comprenant des étapes de processus (4a) séquentielles, les étapes de processus (4a) comprenant une étape de nettoyage (5) destinée au nettoyage de la pièce actuelle (2) pour la débarrasser des contaminants (6) et une étape de mesure de contamination (7) suivante destinée à mesurer une contamination de la pièce actuelle (2), au moins une étape de processus (4a) étant au moins partiellement assistée par une technique de traitement de données et étant exécutée sur la base d'un paramètre de commande (8) - l'étape de paramètre de commande (9) - et une valeur mesurée (11) étant déterminée dans la chaîne d'étapes de processus (4) par détection sur la pièce actuelle (2),
**caractérisé en ce**
**que** le paramètre de commande (8) pour une pièce (2a) qui suit la pièce actuelle (2) est déterminé en se basant sur la valeur mesurée (11) déterminée sur la pièce actuelle (2).

2. Procédé selon la revendication 1, **caractérisé en ce que** les pièces (1) font partie d'éléments installés (12) d'une installation nucléaire (13), de préférence d'une centrale nucléaire, notamment **en ce que** les pièces (11), avant de travers la chaîne d'étapes de processus (4), sont obtenues dans une étape de prétraitement (14) par une découpe des éléments installés (12).

3. Procédé selon la revendication 1 ou 2, **caractérisé en ce que** dans l'étape de paramètre de commande (9), le paramètre de commande (8), de préférence contenant une information de sélection, est communiqué à un opérateur (15) en vue de l'exécution de l'étape de paramètre de commande (9), notamment représenté visuellement sur un dispositif d'affichage (16).

4. Procédé selon l'une des revendications 1 à 3, **caractérisé en ce que** l'étape de paramètre de commande (9) est au moins partiellement, de préférence entièrement, exécutée de manière automatisée en se basant sur le paramètre de commande (6).

5. Procédé selon l'une des revendications 1 à 4, **caractérisé en ce que** la chaîne d'étapes de processus (4) comprend une étape de mesure de géométrie (18), qui précède l'étape de nettoyage (5), destinée à mesurer une information géométrique de la pièce actuelle (2), de préférence **en ce que** le paramètre de commande (8) est déterminé en se basant sur l'information géométrique mesurée sur la pièce actuelle (2).

6. Procédé selon l'une des revendications 1 à 5, **caractérisé en ce que** la chaîne d'étapes de processus (4) comprend une étape de mesure de pré-décontamination (20), qui précède l'étape de nettoyage (5), destinée à mesurer une contamination de la pièce actuelle (2), de préférence une distribution de la contamination (21) et/ou une composition de la contamination, notamment une composition de nucléides, notamment rapportées sur l'information géométrique étant mesurées sur la pièce actuelle (2) dans l'étape de mesure de pré-décontamination (20), notamment aussi **en ce que** le paramètre de commande (8) est déterminé sur la base de la distribution de la contamination (21) et/ou la composition de la contamination mesurées sur la pièce actuelle (2).

7. Procédé selon l'une des revendications 1 à 6*,* **caractérisé en ce que** dans l'étape de mesure de contamination (7), de préférence aussi dans l'étape de mesure de pré-décontamination (20), la contamination est mesurée par un dispositif de spectroscopie gamma (22).

8. Procédé selon l'une des revendications 1 à 6, **caractérisé en ce que** l'étape de mesure de contamination (7) est une étape de mesure de validation (23) destinée à mesurer une validation de pièce, la validation de pièce de la pièce actuelle (2) étant effectuée en vue d'une remise dans le circuit des matières (24) normal s'il est déterminé, dans l'étape de mesure de validation (23), que la pièce actuelle (2) remplit les conditions légales particulières de validation.

9. Procédé selon la revendication 8, **caractérisé en ce que** la, chaîne d'étapes de processus (4) comprend une étape de mesure rapide (26), qui suit l'étape de nettoyage (5), destinée à déterminer rapidement la validation de la pièce et **en ce que** la pièce actuelle (2) poursuit son trajet dans la chaîne d'étapes de processus (4) si la détermination rapide révèle que les conditions de validation sont remplies, de préférence **en ce que** la pièce actuelle (2) est retirée avant l'étape de nettoyage (5) quand et notamment dès que la détermination rapide révèle une violation des conditions de validation, notamment aussi **en ce que** dans l'étape de mesure rapide (26), la contamination est mesurée par un dispositif de spectroscopie gamma (22).

10. Procédé selon l'une des revendications 1 à 9, **caractérisé en ce que** l'étape de nettoyage (5) est exécutée par un dispositif de nettoyage (27), notamment un dispositif à rayons, en se basant sur le paramètre de commande (8), de préférence **en ce que** le paramètre de commande (8) prédéfinit un angle de positionnement (28a) du dispositif de nettoyage (27) par rapport à la pièce suivante (2a) et/ou une valeur de puissance (28b) du dispositif de nettoyage (27) lors du nettoyage et/ou une indication de position (28c) en référence à la pièce suivante (2a) pour le dispositif de nettoyage (27) .

11. Procédé selon la revendication 10, **caractérisé en ce qu'**un mode de nettoyage et/ou un équipement de nettoyage à utiliser pour le dispositif de nettoyage (27) et/ou un produit de nettoyage, notamment un liquide de nettoyage, à utiliser pour le nettoyage sont déterminés en se basant sur le paramètre de commande (8) .

12. Procédé selon l'une des revendications 1 à 11, **caractérisé en ce que** le paramètre de commande (8) prédéfinir une caractéristique d'acheminement, notamment une quantité d'acheminement et/ou une puissance d'acheminement, d'un moyen de processus (29a, b) pour l'exécution de l'étape de paramètre de commande (9).

13. Procédé selon l'une des revendications 1 à 12, **caractérisé en ce qu'**une base de données (32), dans laquelle sont stockées les valeurs mesurées déterminées pour une pluralité de pièces, d'un ordinateur de commande (33) est mise à jour en se basant sur la valeur mesurée (10) déterminée sur la pièce actuelle (2), et **en ce que** le paramètre de commande (8) est déterminé en se basant sur la base de données (32), de préférence par un système expert qui est exécuté sur l'ordinateur de commande (33), de préférence une pluralité d'étapes de processus (4a) étant exécutées assistées par une technique de traitement de données et un jeu de paramètres de commande étant déterminé pour cette pluralité d'étapes de processus (4a) en se basant sur la base de données (32).

14. Procédé selon l'une des revendications 1 à 13, **caractérisé en ce que** la détermination par détection de la valeur mesurée (10) est effectuée dans une étape de processus (4a) de la chaîne d'étapes de processus (4) - l'étape de détection (34) - l'étape de détection (34) suivant l'étape de paramètre de commande (9).

15. Procédé selon l'une des revendications 1 à 14, **caractérisé en ce qu'**à chaque étape de processus (4a) de la chaîne d'étapes de processus (4) est associée au moins une station de traitement (35a-d) destinée à exécuter l'étape de processus (4a) respective et **en ce que** plus de stations de traitement (35b) sont présentes pour l'une des étapes de processus (4a) - l'étape parallèle (36) - que pour la pré-étape de processus (37) qui la précède immédiatement, de sorte que l'étape parallèle (36) peut être exécutée simultanément sur un plus grand nombre de pièces (1) que la pré-étape de processus (37).
